# EUROPEAN PATENT SPECIFICATION

(11) **EP 1 605 067 B1**
(45) Date of publication and mention of the grant of the patent: **28.12.2011**
(21) Application number: 04714008.2
(22) Date of filing: 24.02.2004
(51) Int. Cl.: C21B 13/10, C22B 1/16

(54) **PROCESS FOR PRODUCING PARTICULATE IRON METAL**
HERSTELLUNGSVERFAHREN FÜR PARTIKELFÖRMIGES EISENMETALL
PROCEDE DE PRODUCTION DE METAL FERREUX PARTICULAIRE

(30) Priority: 20.03.2003 JP 2003078225
(43) Date of publication of application: 14.12.2005
(73) Proprietor: Kabushiki Kaisha Kobe Seiko Sho (Kobe Steel, Ltd.), Kobe-shi, Hyogo 651-8585 (JP)
(72) Inventor: ITO, Shuzo, Kobe-shi, Hyogo 6518585 (JP); TSUGE, Osamu, Kobe-shi, Hyogo 6518585 (JP)
(74) Representative: Müller-Boré & Partner Patentanwälte
(86) International application number: PCT/JP2004/002139
(87) International publication number: WO 2004/083463

(56) References cited:
- WO-A-00/29628
- WO-A-02/103064
- JP-A- 10 068 011
- JP-A- 2002 339 009
- JP-A- 2003 073 722
- US-A- 5 575 829
- US-A- 6 149 709

## Description

The present invention relates to a manufacturing method for manufacturing granulated metallic iron, and particularly relates to an improved method for efficiently manufacturing high-quality granulated metallic iron with high productivity while reducing the concentration of sulfur as much as possible due to a carbon material such as coal in a method wherein a raw material mixture or a compact thereof containing an iron-oxide-containing substance such as iron ore or the like, and carbonaceous reducing agent such as a carbon material or the like, is subjected to solid state reduction by heating with a moving hearth-type reducing furnace while separating generated metallic iron from resultant slag, such that the generated metallic iron is coalesced in the form of grains, and is solidified by cooling, whereby the granulated metallic iron is completed.

There has been recently attention given to a manufacturing method for granulated metallic iron, developed as a relatively small-scale iron-making process, wherein a mixture containing an iron-oxide-containing substance (iron source) such as iron ore or the like and a carbonaceous reducing agent such as coal or the like, a simple green formed by compacting the aforementioned mixture, or a carbon composite compact in the form of pellets, briquettes, or the like, is subjected to solid state reduction with a moving hearth-type reducing furnace while separating generated metallic iron from resultant slag, and causing the generated metallic iron to coalescing, and the generated metallic iron is solidified by cooling, whereby the granulated metallic iron is completed. It is referred for instance to document EP-A-1405 924.

The present inventors have proceeded with a study for improving a method for reducing the sulfur amount contained in the granulated metallic iron obtained in the aforementioned method, and as a result, it has been revealed that considerable desulfurizing effects can be obtained with a method wherein a suitable amount of a Ca-containing substance exhibiting desulfurizing effects due to high affinity for sulfur, e.g., CaCO₃, is further added to the raw material mixture containing coal serving as a carbonaceous reducing agent as well as an iron-oxide-containing substance, and the aforementioned raw material mixture is reduced and melted by heating while suitably controlling heating temperature, atmosphere gas composition, and the like. However, demand for techniques exhibiting further desulfurizing effects is increasing.

Accordingly, it is an object of the present invention to provide a method for manufacturing high-quality granulated metallic iron with high productivity while reducing the concentration of sulfur as much as possible, which is an unavoidable result of generating the granulated metallic iron with the method wherein a raw material mixture or a compact thereof containing an iron-oxide-containing substance and a carbonaceous reducing agent is heated with a moving hearth-type reducing furnace or the like, so that the iron-oxide-containing substance is subjected to solid state reduction with the carbonaceous reducing agent, and in particular, in a case of employing coal or the like as a carbon material.

In order to achieve the above-described object, with a manufacturing method for granulated metallic iron according to the present invention, as defined in claim 1, wherein a raw material mixture containing an iron-oxide containing substance and a carbonaceous reducing agent is supplied onto a hearth of a moving hearth-type reducing furnace so as to be heated, the iron oxide contained in the raw material mixture is reduced with the carbonaceous reducing agent, and the generated metallic iron is coalesced in the form of grains while being separated from the resultant slag, following which the generated metallic iron is cooled so as to solidify, whereby granulated metallic iron is completed, the amounts of a CaO-containing substance, an MgO-containing substance, and a SiO₂-containing substance, contained in the raw material mixture, are adjusted such that operation is performed with the slag basicity (CaO + MgO)/SiO₂ of 1.3 to 2.3, and with MgO-concentration of 5 to 13% by mass as to the slag composition, which are dependent upon the concentration of each of CaO, MgO, and SiO₂, contained in the raw material mixture, wherein an MgO-containing substance is further blended to the raw material mixture so as to adjust the slag basicity and the MgO-concentration, wherein a sulfur partition ratio (s) /[s] between the slag and the metal of 25 or more is maintained. In most general cases, dolomite ore is employed as the MgO-containing substance. Furthermore, in some cases, a suitable amount of CaF₂-containing substance is preferably further contained in the raw material mixture, exhibiting the advantage of adjusting the fluidity of the resultant slag. In this case, the CaF₂-containing substance is preferably contained in the raw material mixture with a CaF₂-concentration of 0.2 to 2% by mass.

With the aforementioned manufacturing method according to the present invention, carbonaceous powder is preferably supplied so as to be spread over the hearth with thickness of 2 mm to 7.5 mm prior to supplying the raw material mixture to the moving hearth-type reducing furnace, effecting the advantage of maintaining high reduction potential within the furnace due to the action of the aforementioned carbonaceous powder, thereby improving desulfurization, and thereby obtaining granulated metallic iron with low sulfur concentration as well as improving the yield of the metallic iron. Note that manufacturing operation is preferably performed with the moving hearth-type reducing furnace under operation temperature of 1250 to 1550°C.

Thus, with the above-described manufacturing process wherein a raw material mixture containing an iron-oxide-containing substance and a carbonaceous reducing agent is subjected to heating and reducing with a moving hearth-type reducing furnace such as a rotary heating-hearth-type reducing furnace, so as to manufacture granulated metallic iron, a suitable amount of an MgO-containing substance, which is to serve as a slag component, is aggressively included in said raw material mixture such that both the basicity (CaO + MgO)/SiO₂ of the resultant slag, and the MgO-concentration as to the slag composition, exhibit suitable ranges, suppressing an increase of sulfur concentration of manufactured granulated metallic iron, unavoidably occurring due to use of coal, coke, or the like, serving as a carbon material, thereby enabling manufacturing of high-quality granulated metallic iron with small sulfur concentration with high productivity.
Fig. 1 is a conceptual explanatory diagram which shows an example of a moving hearth-type reducing furnace employed in a manufacturing method according to the present invention;
Fig. 2 is a chart which shows the relations between slag basicity (CaO + MgO)/SiO₂ and the melting point of the slag obtained from test results, wherein the curve (i) represents a case of employing only limestone for adjusting the slag basicity in the material mixture, and the curve (ii) represents a case of employing both the limestone and dolomite;
Fig. 3 is a chart which shows the relations between slag basicity (C + M)/S and the melting point of the slag obtained from another test, wherein the curve (i) represents a case of employing only limestone for adjusting the slag basicity in the material mixture, and the curve (ii) represents a case of employing both the limestone and dolomite;
Fig. 4 is a chart which shows the relations between the MgO-concentration in the slag and the sulfur partition ratio (S)/[S] in a case of employing dolomite for adjusting the slag basicity, wherein white circles represent the test results in a case of iron ore A, and solid circles represent the test results in a case of iron ore B;
Fig. 5 is a chart which shows the relation between the slag basicity (C + M)/S and the sulfur partition ratio (S)/[S] obtained from a test; and
Fig. 6 is a chart which shows the relation between the slag basicity (C + M)/S and the sulfur partition ratio (S)/[S] obtained from another test.

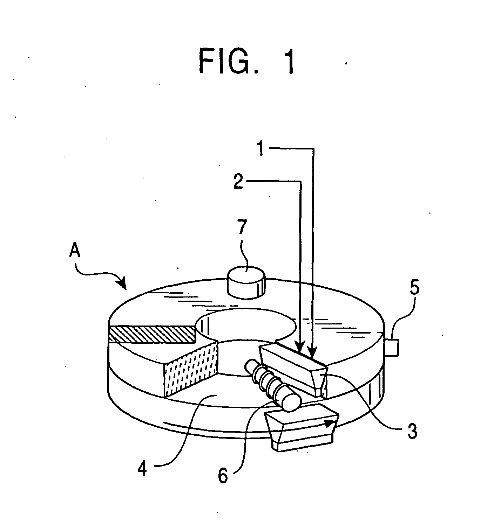

Fig. 1 is a schematic diagram which shows an example of a moving hearth-type reducing furnace, wherein a rotary hearth furnace is employed, used in a method according to the present invention.

With a rotary hearth-type reducing furnace A, a material mixture (compacted simple green, or a compact such as a pellet, a briquette, or the like) 1 formed of an iron-oxide-containing substance and a carbonaceous agent, and if necessary, further formed of CaO, MgO, SiO₂, or the like, contained as a matrix component or ash component, a binder, and a granulated carbonaceous substance 2, preferably supplied so as to be spread over the hearth, is continuously supplied onto the hearth of a rotary hearth 4 through a material supply hopper 3.

More specifically, prior to supply of the material mixture 1, the powdery carbonaceous material 2 is supplied so as to be spread over the rotary hearth 4 through the material supply hopper 3, following which the material mixture 1 is supplied so as to overlay the aforementioned powdery carbonaceous material 2. While description has been made with reference to the drawing, regarding an example wherein both the material mixture 1 and the carbonaceous substance 2 are supplied through the single material supply hopper 3, it is needless to say that an arrangement may be made wherein the material mixture 1 and the carbonaceous substance 2 are supplied through two or more hoppers 2. On the other hand, the carbonaceous substance 2 supplied so as to be spread over the hearth, which is markedly effective in improving desulfurizing effect as well as improving reducing effects, may be omitted in some cases, as described later.

The rotary hearth 4 of the rotary hearth-type reducing furnace A is rotated counterclockwise normally with a cycle period of 8 to 16 minutes, depending upon operating conditions, and in the cycle period, the iron oxide contained in the material mixture 1 is reduced in solid state, and is coalesced in the form of grains due to lowering of melting point occurring due to carburizing, as well as separating generated metallic iron from resultant slag, whereby the granulated metallic iron is completed. Note that the reducing furnace A includes multiple combustion burners 5 on the upper side wall and/or the ceiling portion of the rotary hearth 4 so as to supply heat to the heath portion with combustion heat or radiant heat thereof from these burners 5.

The material mixture 1 supplied onto the rotary hearth 4 formed of a refractory material is heated with combustion heat or radiant heat from the burners 5 while being rotationally moved within the reducing furnace A on the rotary hearth 4, and the iron oxide contained in the material mixture 1 is reduced in solid state while passing through the heating band within the reducing furnace A, following which the generated metallic iron is coalesced in the form of grains while softening due to carburizing from the remaining carbonaceous reducing agent, as well as separating the generated metallic iron from the resultant molten slag, and the generated metallic iron is solidified by cooling in a downstream zone of the rotary hearth 4, following which the generated metallic iron is discharged from the hearth with a discharge device 6 such as a screw. Note that reference character 7 denotes an exhaust gas duct.

On the other hand, a large-sized rotary hearth-type reducing furnace which is generally employed as a practice furnace has a configuration wherein fuel gas such as natural gas is burned with the multiple burners provided on the upper portion of the rotary hearth so as to supply combustion heat required for reducing and melting of the material mixture supplied on the hearth. However, oxidizing gas such as CO₂, H₂O, and the like, contained in the exhaust gas generated due to the aforementioned combustion affects the atmosphere gas composition surrounding the material mixture, leading to considerable difficulty in maintaining high reduction potential of the atmosphere gas, which is represented by (CO + H₂)/(CO + CO₂ + H₂ + H₂O), and in many cases, which is also abbreviated to CO/(CO + CO₂).

Upon reduction of the iron oxide contained in material mixture being generally completed in a step of heating and reducing on the rotary hearth, reduced iron corresponding to pure iron is generated. Furthermore, the reduced iron particles generated in the step for heating and reducing are rapidly carburized due to the remaining carbonaceous reducing agent contained in the material mixture. As a result, the melting point thereof is greatly reduced due to increased amount of C contained in the reduced iron, leading to melting at a predetermined atmosphere temperature (e.g., 1350 to 1500°C), and further leading to coalescence of the fine reduced-iron particles, whereby metallic iron is obtained in the form of large-sized grains. In the step for melting and coalescence, the slag components contained in the material mixture are melted and coalesced, as well, while being separated from the metallic iron.

In this case, in the event that the material mixture or the atmosphere gas surrounding the material mixture has sufficient reduction potential, the sulfur component contained in the coal, coke, or the like, serving as a carbonaceous reducing agent, added to the material mixture, is fixed as CaS due to the CaO component contained in the slag, whereby the sulfur component is separated along with the slag.

However, the present inventors have revealed that in the event that the atmosphere gas has insufficient reduction potential at the time of reducing and melting, reaction of CaS and FeO occurs, each of which exist in an equilibrium manner, leading to a problem that the sulfur component is readily absorbed into the molten granulated metallic iron so as to form FeS. Accordingly, the present inventors made an intense study in order to obtain a method for maintaining high-level reduction potential of the atmosphere gas surrounding such a material mixture.

As a result, a method has been obtained as follows. That is to say, first, a carbonaceous powder layer is formed on the hearth of the reducing furnace beforehand, and the material mixture is supplied so as to overlay the aforementioned carbonaceous powder layer (which will be referred to as "carbonaceous powder layer spread over the hearth" hereafter), following which heating and reducing is performed. With the aforementioned method, high-level reduction potential of the atmosphere gas surrounding such a material mixture can be maintained as well as efficiently proceeding with reaction of reducing and melting in a short period in time of 10 to 16 minutes, which is a cycle period of the hearth of the rotary hearth-type reducing furnace, thereby relatively improving desulfurization.

However, as already described above, only the above described operations performed with a practical-scale rotary hearth-type reducing furnace exhibit insufficient desulfurization required for obtaining granulated metallic iron with a sulfur concentration of 0.05% or less in a sure manner, and accordingly, there is the need to establish the technique for further reducing the sulfur concentration of the granulated metallic iron in a sure manner. Accordingly, the present inventors has revealed a method according to the present invention through an intense study, wherein a suitable amount of MgO is contained in the slag while suitably controlling the basicity (CaO + MgO)/SiO₂, based upon concentration of CaO, MgO, and SiO₂, contained in the material mixture, effecting desulfurization more efficiently in a step for reducing and melting, thereby markedly improving quality of the generated granulated metallic iron.

Specifically, with the present embodiment, the supply amounts of the aforementioned CaO and MgO are adjusted such that the basicity (CaO + MgO)/SiO₂ of the composition of the slag is controlled in a range of 1.3 to 2.3 while maintaining the MgO-concentration of 5 to 13%, based upon the kind and the amount of the matrix component contained in the iron oxide (iron ore or the like) and the kind and the amount of the ash component contained in the carbonaceous reducing agent (coal, coke powder, or the like), contained in the material mixture, and furthermore, in some cases, the kind and the amount of the ash component contained in a CaO-containing substance or an MgO-containing substance, which may be additionally supplied, and the kind and the amount of the ash component contained in a carbonaceous powder which may be supplied so as to be spread on the hearth. This leads to stable and high desulfurization, thereby obtaining granulated metallic iron with reduced sulfur concentration as much as possible.

Note that in order to control the basicity (CaO + MgO)/SiO₂ of the component of the slag compact within a range of 1.3 to 2.3, the supply amounts of a CaO-containing substance or MgO-containing substance, which are added separately from the material mixture, are adjusted based upon the matrix component contained in iron ore or the like supplied as an iron-oxide-containing substance, the composition and the concentration of the ash component contained in coal, coke, or the like supplied as a carbonaceous reducing agent, and furthermore, in some cases, the composition and the concentration of the ash component contained in carbonaceous powder which may be supplied so as to be spread over the hearth.

While the kinds of the CaO-containing substance and MgO-containing substance are not restricted in particular, in the most general cases, calcium oxide or CaCO₃ is employed as a CaO-containing substance, and an MgO-containing substance extracted from natural ore including dolomite ore or seawater, is preferably employed. Furthermore, the addition method employed in the present embodiment is not restricted in particular, rather, an arrangement may be made wherein the additional substances are added to the material mixture in the stage for adjusting the material mixture beforehand, or an arrangement may be made wherein the additional substances are supplied onto the rotary hearth beforehand along with or separately from the aforementioned carbonaceous powder which is to be supplied so as to be spread over the rotary hearth, and further, an arrangement may be made wherein the additional substances are added separately from the material mixture from the upper portion at the same time of or following supply of the material mixture, and so forth.

On the other hand, it has been already confirmed that the ratio of the sulfur concentration of the molten slag as to the sulfur concentration of the molten iron (reduced iron), which will be referred to as "sulfur partition ratio (S)/[S]" hereafter, is greatly dependent upon the basicity of the resultant slag in conventional methods for manufacturing metallic iron, as well. However, while the action of the sulfur in the manufacturing process for granulated metallic iron using a moving hearth-type reducing hearth according to the present invention is superficially similar to the conventional ones, the mechanism thereof according to the present invention is considerably different from that of the conventional ones.

That is to say, with the sulfur distribution in the ordinary iron making or steel making, the sulfur partition ratio (S)/[S] is dependent upon equilibrium thereof which in turn is dependent upon the composition of the molten slag on the surface of the molten iron, the composition of the molten iron, and the atmosphere conditions.

On the other hand, with the manufacturing method for granulated metallic iron using a moving hearth-type reducing furnace according to the present invention, the iron oxide in the material mixture is reduced with a carbonaceous reducing agent in the state of a solid under an atmosphere temperature of around 1250 to 1550°C. Thus, the iron oxide is deoxidized, whereby reduced iron is obtained. Accordingly, the most of the coal or coke contained in the material mixture is used in the stage of solid state reduction. On the other hand, while a part of the sulfur contained in the coal or the like evaporates into the atmosphere, the most thereof is absorbed by the matrix component or the ash component contained in the material mixture, or CaO or the like contained in the additive material, leading to sulfur remaining in the material mixture in the form of CaS.

Furthermore, upon solid state reduction being generally completed, the reduced iron fine particles in the material mixture is subjected to rapid carburization by the remaining carbonaceous substance, i.e., carbon (C), leading to reduction of the melting point of the reduced iron as clearly shown in Fe-C phase diagram. As a result, it has been confirmed that the reduced iron subjected to carburization melts even at 1500°C or less, for example, or even as low as 1350°C or less, and the fine-particle reduced iron is coalesced, leading to the growth of large-sized granulated metallic iron.

Furthermore, in the step of the carburization and coalescence of the reduced iron, a part or all of the slag components (metal oxides which have not been reduced due to high affinity for oxygen, such as CaO, SiO₂, Al₂O₃, MgO, and the like) melt, and the generated molten slag is coalesced, as well, leading to generally-complete separation of the slag from the granulated metallic iron coalesced due to melting and carburization.

In any case, in the aforementioned step of the carburization and coalescence of the reduced iron and the resultant slag, the sulfur (S) mainly captured by CaO in the slag so as to form CaS is greatly affected by the reduction potential of the atmosphere gas surrounding the material mixture, even in the event of maintaining the same slag composition. For example, it has been confirmed that in the event of the reduction potential [CO/(CO + CO₂)] of the atmosphere gas of around 0.7 or less, a part amount or a considerable amount of the sulfur fixed in the form of CaS migrates to the reduced iron so as to form FeS.

Accordingly, in order to reduce the sulfur component (S) contained in the granulated metallic iron manufactured with the method according to the present invention, i.e., in order to improve actual desulfurization, it is markedly important to stably keep the sulfur component (S) fixed in the form of CaS in the slag so as to prevent migration of the sulfur toward the reduced iron. Accordingly, it is important to maintain the basicity of the slag in the final stage as high as possible, as well as maintaining high reduction potential of the atmosphere gas.

With the process of reducing and melting according to the present invention, iron is preferably not manufactured under an atmosphere temperature of 1550°C or more, unlike the conventional iron-making or steel making furnaces wherein molten iron is reduced, from the perspective of the equipment and operation of the rotary hearth-type reducing furnace, and in this case, iron is preferably manufactured under an atmosphere temperature of around 1550°C or less, and is more preferably manufactured under an atmosphere temperature of around 1500°C or less. However, adjustment of the slag generated in the aforementioned step of reducing and melting, with increased basicity of 2.3 or more, inhibits coalescence of the reduced iron, as well as increasing the melting point of the slag, leading to inhibition of coalescence of the slag. This leads to difficulty in manufacturing large-sized granulated metallic iron with a high yield, which is contrary to the object of the present invention.

With the present embodiment, as described above, the composition of the material is adjusted such that the basicity (CaO + MgO) / (SiO₂) , which will be also abbreviated to "(C + M)/S"hereafter, is controlled in a range of 1.3 to 2.3 while maintaining the MgO-concentration of 5 to 13% contained in the slag, effecting remarked improvement of the sulfur partition ratio (S)/[S] between the slag and the granulated metallic iron, generated in the final stage, thereby greatly reducing the sulfur-concentration [S] remaining in the granulated metallic iron. The reason for the aforementioned suitable ranges of the slag basicity (C + M)/S and the MgO-concentration in the slag will be described later in detail.

Note that it has been known that the sulfur partition ratio (S)/[S] has a strong relation with the slag basicity in the reaction between the slag and the metal in the ordinary iron making or steel making, as described above. Furthermore, it has been confirmed that the MgO indispensable for the manufacturing method according to the present invention has considerably poor desulfurization as compared with CaO. According to the present invention, a considerable amount of MgO is aggressively used along with CaO, and as a result, the manufacturing method according to the present invention has the advantage of drastically improved desulfurizing effects as compared with a method of employing only CaO.

While at present, the reason why excellent desulfurizing effects can be obtained by using MgO has not been theoretically proven, it has been assumed as follows, giving consideration to test results described later. That is to say, it is assumed that suitable adjustment of the slag basicity (C + M)/S including a suitable amount of MgO in the resultant slag realizes the optimal properties such as the melting point, fluidity, or the like, of the resultant slag, thereby maximally improving the sulfur partition ratio (S)/[S] of the resultant slag.

On the other hand, with the manufacturing process using a moving hearth reducing melting furnace according to the present invention, the relation between the slag basicity (C + M)/S generated in the final stage and the melting point is considerably dependent upon the kind and brand of the iron-oxide-containing substance (iron ore or the like) and the carbonaceous reducing agent (coal or coke) serving as raw materials.

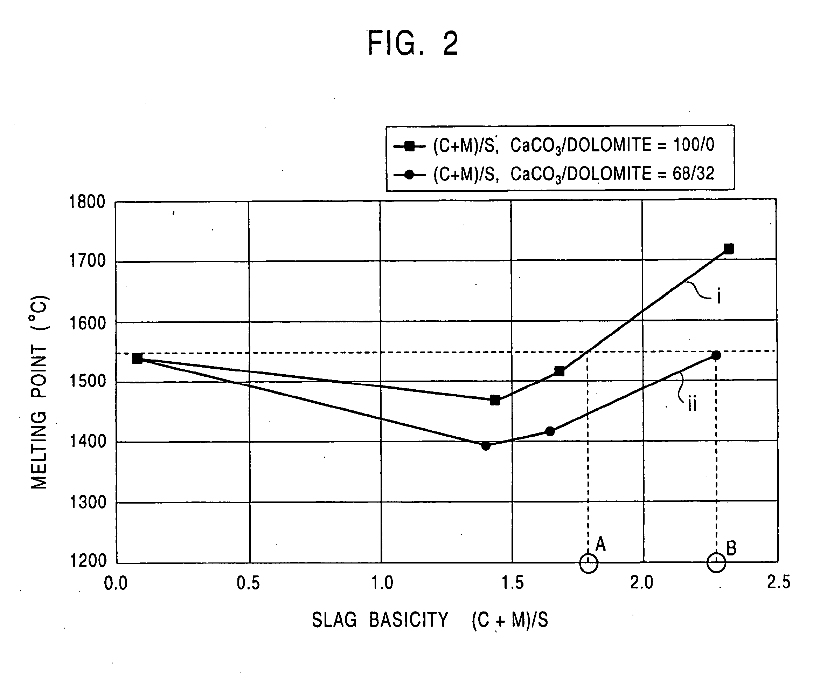

For example, Fig. 2 shows research results of the relation between the basicity (C + M)/S of the generated slag and the melting point in a case of the process of reducing and melting with a rotary hearth-type reducing furnace using a material mixture formed of hematite ore (A) (see Table 1 in the Example described later), which is a typical example of an iron-oxide-containing substance, coal (see Table 2 in the Example described later) serving as a carbonaceous reducing agent, each of which serve as main raw materials, and further containing limestone serving as a CaO-containing substance, and dolomite serving as an MgO-containing substance for adjusting the basicity of the slag in the final stage.

In the drawings, the melting point of the slag is calculated from the phase diagrams based upon a quaternary system formed of CaO, SiO₂, Al₂O₃, and MgO, serving as principal components of the slag. Note that the curve (i) in the drawing represents the relation between the slag basicity and the melting point in a case of supplying only limestone, which is a CaO-containing substance, as a basicity adjusting agent. As can be clearly understood from the curve, the slag basicity (C + M)/S exceeding approximately 1.4 causes a rapid increase of the melting point of the slag. Furthermore, the slag basicity (C + M)/S of around 1.75 causes the melting point of the slag to reach approximately 1550°C, which is assumed to be the maximal temperature permissive for actual practical operation. Furthermore, the slag basicity (C + M)/S exceeding around 1.75 causes the melting point of the slag to exceed 1550°C, which is beyond the range permissive for the manufacturing method according to the present invention. Accordingly, in the event of maintaining the atmosphere temperature, melting and coalescence of the resultant slag is inhibited, leading to difficulty in coalescence of reduced iron, which is contrary to the object of the present invention. It is needless to say that manufacturing at an increased atmosphere temperature (operating temperature) exceeding 1550°C enables melting of the high-basicity slag. However, with the moving hearth-type reducing furnace according to the present invention, manufacturing under an operation temperature of 1550°C or more leads to marked reduction of the lifespan due to the nature of the equipment, which is against the practical operation.

On the other hand, the curve (ii) shown in Fig. 2 represents the relation between the slag basicity (C + M)/S and the melting point in a case of supplying both limestone and dolomite as basicity-adjusting agents. As can be clearly understood from the curve, an increase of the MgO concentration in the slag in the final stage causes reduction of the melting point of the slag in the final stage over the entire range of the slag basicity as compared with the curve (i). Furthermore, it can be understood that addition of a suitable amount of an MgO-containing substance to the material mixture suppresses the melting point of the slag in the final stage to 1550°C or less, even in the event that the basicity (C + M)/S of the slag is increased up to around 2.3, thereby enabling operation without problems under the atmosphere temperature of 1550°C which leads to problems in a case of Fig. 1.

As described above, with the manufacturing method according to the present invention, manufacturing is made with a practical-scale moving hearth-type reducing furnace with increased basicity (C + M)/S of the slag in the final stage up to around 2.3, which is the maximal permissive basicity, using an MgO-containing substance serving as a basicity-adjusting agent, sufficient for melting the slag under an atmosphere temperature up to 1550°C which matches the need for practical operation, thereby stably manufacturing granulated metallic iron under stable operation situations while maintaining the sulfur partition ratio (S)/[S] between the slag and the metal of 25 or more, and preferably maintaining that of 35 or more. As a result, the granulated metallic iron can be obtained in the final stage in a sure manner with a sulfur concentration of 0.05% or less, and preferably with a sulfur concentration of 0.04 or less, somewhat depending upon the brand of the coal or the like supplied as a carbonaceous reducing agent or a material supplied so as to be spread over the hearth.

In particular, the manufacturing method according to the present invention has a significant advantage of preventing reduction of the sulfur partition ratio (S)/[S] due to deterioration in the reduction potential of the atmosphere gas by adjusting the slag basicity (C + M)/S and the Mg-concentration, which is unavoidable in a case of employing a combustion heating method using gas burners most generally employed as the heating method for a practical furnace.

Note that further increase of the supply ratio of the limestone and dolomite serving as basicity adjusting agents, which further increases MgO-concentration of the slag in the final stage, further reduces the melting point of the slag in the final stage, and accordingly, an arrangement may be made wherein manufacturing is made with the slag basicity (C + M)/S exceeding 2.3. However, in this case, excessive increase of the slag basicity (C + M)/S of the resultant slag increases the viscosity (which leads to poor fluidity), leading to inhibition of coalescence of the reduced iron, and leading to deterioration in the yield of the granulated metallic iron, as well as leading to difficulty in obtaining suitable generally-sphere-shaped granulated metallic iron. Accordingly, with the present embodiment according to the present invention, the maximal value of the basicity (C + M)/s is determined to be 2.3.

Note that the reason why the minimal value of the basicity (C + M)/s is determined to be 1.3 is that the adjustment of the slag with a slag basicity less than the aforementioned minimal value causes deterioration in desulfurization of the slag itself, leading to difficulty in reducing sulfur concentration of the reduced iron, even in a case of the low reduction potential. Accordingly, with the present embodiment according to the present invention, the slag basicity (C + M)/S is preferably determined to be in a range of 1.4 to 2.0.

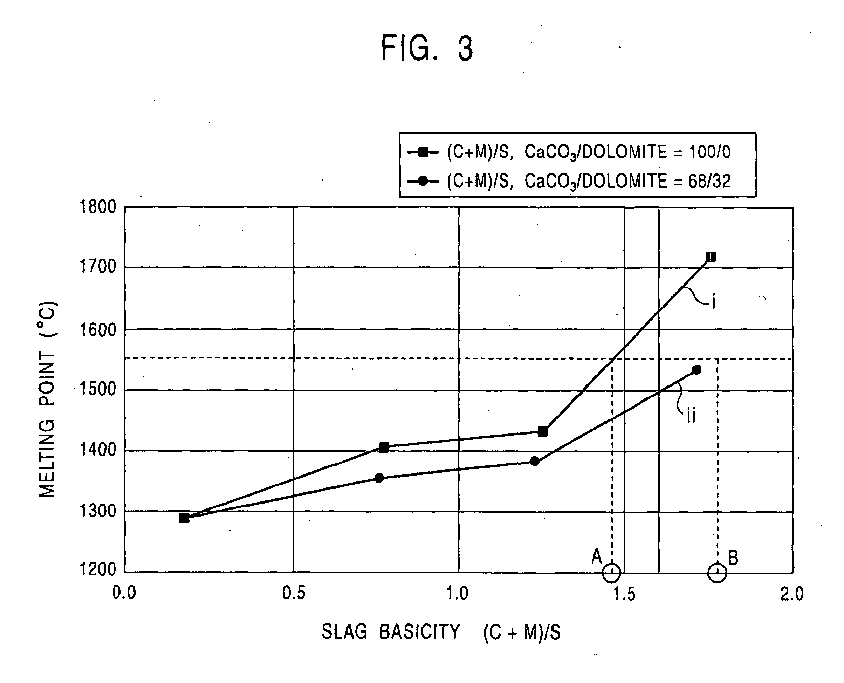

Fig. 3 shows the relation between the slag basicity (C + M)/S and the melting point of the slag, wherein the generated slag basicity (C + M)/S is controlled by adjusting the addition amount of a CaO-containing substance and an MgO-containing substance, added to the material mixture mainly formed of magnetite ore serving as an iron-oxide-containing substance and coal serving as a carbonaceous reducing agent shown in Table 2 described later in the same way as in Fig. 2 described above.

While the relation therebetween is dependent upon the brand of the ore, in a case of employing only limestone as a basicity adjusting agent, the slag basicity (C + M)/S of around 1.5 or less causes the melting point of the slag of 1550°C, as can be clearly understood from the curve (i) in the drawing. On the other hand, in a case of replacing 32% of the amount of limestone with dolomite for adjusting the slag basicity, the increase of the MgO-concentration of the slag prevents rapid increase of the melting point of the slag due to an increase of the slag basicity, as can be clearly understood from the curve (ii). For example, even in a case of increased slag basicity (C + M)/S of around 1.8 or less, the melting point of the slag is suppressed to 1550°C or less.

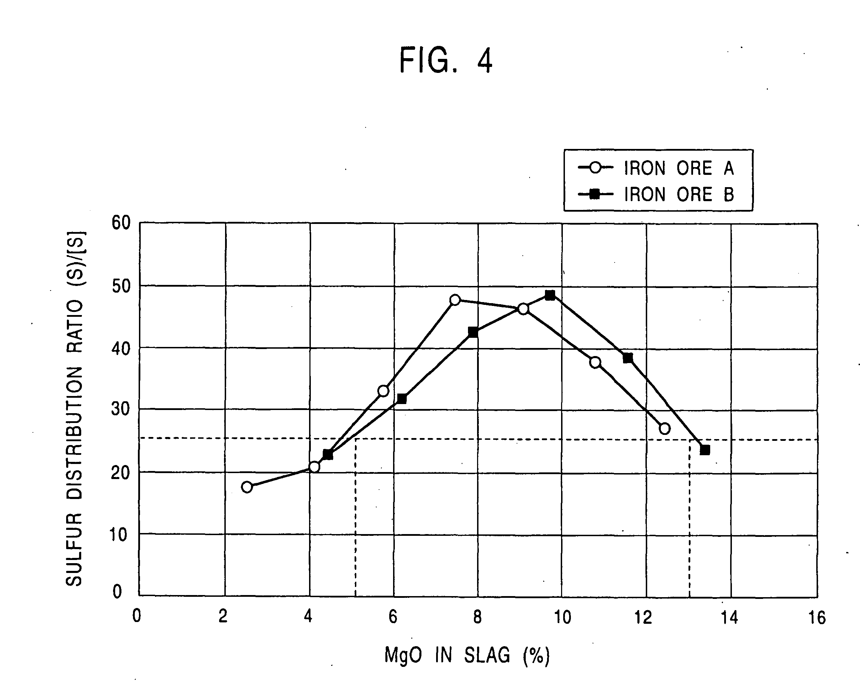

Fig. 4 shows the research results of the relation between the MgO-concentration of the slag and the sulfur partition ratio (S)/[S], obtained with the manufacturing method according to the present invention. As can be clearly understood from the drawing, there is a strong relation between the MgO-concentration in the slag and the sulfur partition ratio (S)/[S]. Furthermore, it can be understood that the sulfur partition ratio (S)/[S] does not exhibit an increase proportional to the MgO-concentration of the slag, but the sulfur partition ratio exhibits the maximal value in a particular region of the MgO-concentration in the slag.

That is to say, Fig. 4 shows the test results for the two kinds of the material mixtures using iron ore A and iron ore B, respectively, serving as iron-oxide-containing substances. While these test results exhibit somewhat of a difference therebetween due to the properties of the material, the test results exhibit generally the same nature. In either case, the sulfur partition ratio (S)/[S] exhibits a high value of 25 or more with the MgO-concentration in a range of 5 to 13%, thereby exhibiting the advantage of reduction of sulfur component in the reduced iron. While the detailed mechanism is unclear at present, it is assumed that the slag composition is contained in the supplied material in a complicated way, which affects the sulfur partition ratio (S)/[S]. In either case, the suitable MgO-concentration in the slag is determined to be in a range of 5 to 13% so as to effect the sulfur partition ratio (S)/[S] of 25 or more based upon the test results using these typical two kinds of iron ore (A) and (B).

As described above, with the manufacturing method according to the present invention, the slag basicity (C + M)/S calculated based upon the slag composition contained in all of the used raw material, and the MgO-concentration of the slag, are suitably adjusted so as to suitably control the melting point of the generated slag and the sulfur partition ratio (S)/[S], for an iron-oxide-containing substance, a carbonaceous reducing agent, and the like, used in the present manufacturing method.

On the other hand, with a relatively high slag basicity (C + M)/S of 1.8 or more, the reaction exhibits the basic nature that the increased basicity (C + M)/S causes gradual deterioration in coalescence of the reduced-iron fine particles generated due to the iron-oxide-containing substance being subjected to reduction in the material mixture, even with the slag basicity (C + M)/S of 2.3 or less.

Furthermore, a slag basicity (C + M)/S which exceeds 2.3 contributes to deterioration in coalescence of the slag, leading to deterioration in coalescence of the generated reduced-iron particles, as well, and leading to difficulty in obtaining large-sized granulated metallic iron with the high yield, which is the object of the present invention. In order to realize practical operation of the manufacturing method according to the present invention from the economic perspective, large-sized granulated metallic iron which is the object of the present invention needs to be manufactured with as high a yield as possible, even in a case of the slag basicity (C + M)/S of 2.3 or less in the final stage.

Accordingly, the present inventors have revealed a method for suppressing deterioration in the yield of the granulated metallic iron with suitable particle size due to increased slag basicity (C + M)/S through intense study. That is to say, addition of a suitable amount of a CaF₂-containing substance, e.g., fluorite, to the material mixture improves fluidity as well as reducing the melting point of the generated slag, thereby effecting improvement of coalescence of the slag, as well as improving coalescence of the reduced iron particles, thereby significantly improving the yield of the large-sized granulated metallic iron. Note that it has been confirmed that the , aforementioned CaF₂-containing substance should be supplied with a CaF₂-concentration of 0.2% or more as to all of the slag composition, and preferably 0.4% or more, in order to efficiently exhibit the advantages due to the supply of such a CaF₂-containing substance with a practical scale.

More specifically, with the present embodiment, in a case of the slag basicity (C + M)/S of 1.7 or more, and in particular, exceeding 1.8, in the final stage, CaF₂ is added to the material mixture with CaF₂-concentration of 0.2% or more as to the slag composition so that the increased CaF₂ concentration compensates for deterioration in fluidity due to increased slag basicity (C + M)/S, thereby enabling stable manufacturing of large-sized granulated metallic iron with the high yield.

Note that the excessive supply of the CaF₂ causes excessively high fluidity of the generated slag, leading to another problem that the hearth formed of a refractory material is readily damaged. Accordingly, the concentration of the CaF₂-containing substance is preferably suppressed to 2.0% or less as to the whole of the slag composition, and is more preferably suppressed to 1.5% or less.

Note that with the manufacturing method according to the present invention, the basicity (C + M)/S of the generated slag and the MgO concentration are determined as described above, which is the most essential component according to the present invention. On the other hand, while the carbonaceous material supplied so as to be spread over the hearth is not indispensable, the aforementioned supply of the carbonaceous material is preferable in order to more efficiently improve the reduction potential in the furnace, thereby more efficiently improving both the advantages of high yield of the metallic iron and reduction of sulfur concentration thereof. Note that with the aforementioned supply of the carbonaceous material, a powder carbonaceous material is preferably supplied so as to be spread over the hearth with a thickness of around 2 mm in order to exhibit such an advantage in a sure manner. Furthermore, the carbonaceous material spread over the hearth serves as a buffer between the raw material mixture and the hearth formed of a refractory material, and furthermore serves as a protector for the hearth, thereby improving the lifespan of the hearth.

Note that carbonaceous material spread over the hearth with an excessively great thickness causes the material mixture to flow into the carbonaceous material layer spread over the hearth, which may lead to a problem of inhibition of reduction of the iron oxide. Accordingly, the thickness of the aforementioned carbonaceous material spread over the hearth is preferably suppressed to around 7.5 mm or less.

Note that the kind of the aforementioned carbonaceous material spread over the hearth is not restricted in particular, and an arrangement may be employed wherein ordinary coal or coke is crushed, and preferably adjusted so as to exhibit a suitable grain size. Note that in a case of employing coal, anthracite is preferably employed for the reason of exhibiting low fluidity, low expansion, and low adhesion, on the hearth.

### Examples

While specific description will be made below with reference to examples, the present invention is not restricted to the examples described here, rather, various modifications may be made as appropriate within the spirit and scope of the appended Claims, in light of the above and following descriptions, which are also encompassed in the technical scope of the present invention.

### Example 1

First, raw material compacts in the form of pellets were formed of iron ore serving as an iron-oxide-containing substance, coal serving as a carbonaceous reducing agent, and additional material for adjusting the slag basicity such as limestone (CaCO₃), dolomite (CaCO₃ · MgCO₃), or the like, and if necessary, a suitable amount of fluorite (CaF₂), and furthermore, a small amount of wheat flour serving as a binder. Note that two kinds of iron ore A and B are employed as shown in Table 1. On the other hand, the composition of the coal serving as a carbonaceous reducing agent is shown in Table 2.

**[Table 1]**

| | T-Fe | FeO | Fe₂O₃ | Fe₃O₄ | SiO₂ | Al₂O₃ | CaO | MgO | S | P | OTHER |
|---|---|---|---|---|---|---|---|---|---|---|---|
| ORE A | 68.01 | 0.10 | 97.13 | 0.00 | 1.08 | 0.47 | 0.03 | 0.06 | 0.002 | 0.033 | 0.68 |
| ORE B | 68.67 | 0.00 | 0.00 | 94.90 | 3.83 | 0.19 | 0.38 | 0.40 | 0.002 | 0.024 | 0.09 |
| (% by mass) | | | | | | | | | | | |

**[Table 2]**

| INDUSTRIAL ANALYSIS VALUES (% by mass) | | | | | ELEMENT ANALYSIS METHOD (% by mass) | | | | | | | |
|---|---|---|---|---|---|---|---|---|---|---|---|---|
| VOLATILE COMPONENT | TOTAL ASH COMPONENT | SULFUR | PHOSPHORUS | TOTAL | C | H | N | Cl | S | ASH | P | 0 |
| 19.90 | 8.6 | 0.53 | 0.029 | 28.5 | 81.77 | 4.33 | 1.64 | 0.03 | 0.53 | 8.04 | 0.029 | 3.63 |

| ASH COMPONENT ANALYSIS VALUES (% by mass) | | | | | | | | | | | | |
|---|---|---|---|---|---|---|---|---|---|---|---|---|
| Fe₂O₃ | Al₂O₃ | TiO2 | Fe₂O₃ | CaO | MgO | Na₂O | K₃O | P₂O₆ | OTHERS | | | |
| 49.44 | 34.68 | 1.84 | 4.78 | 2.72 | 1.01 | 0.48 | 2.09 | 0.76 | 2.2 | | | |

The aforementioned raw material compacts were continuously supplied into the small-sized experimental rotary hearth-type reducing furnace so as to be subjected to heating and reduction. The respective temperatures of the heating reduction zone and the carburizing melting zone were set in a range of 1400 to 1470°C by heating from the burners. The iron-oxide component contained in the material compact supplied onto the hearth of the rotary hearth-type reducing furnace was subjected to reduction in the form of a solid while passing around through the heating region within the furnace in a cycle period of around 10 to 16 minutes. The generated reduced iron was subjected to carburization due to the remaining carbonaceous substance in the latter stage of reduction in the reducing furnace, leading to reduction of the melting point, and leading to coalescence of the reduced iron. On the other hand, part or all of the resultant slag melts, leading to coalescence of the slag, as well, thereby enabling separation of molten granulated metallic iron from rt the molten slag. Subsequently, these molten granulated metallic iron and molten slag are cooled down to the melting point or less (specifically, cooled down to around 1100°C) so as to solidify in the final stage in the rotary hearth-type reducing furnace, following which the granulated metallic iron and the slag in the form of a solid are discharged outside from the furnace.

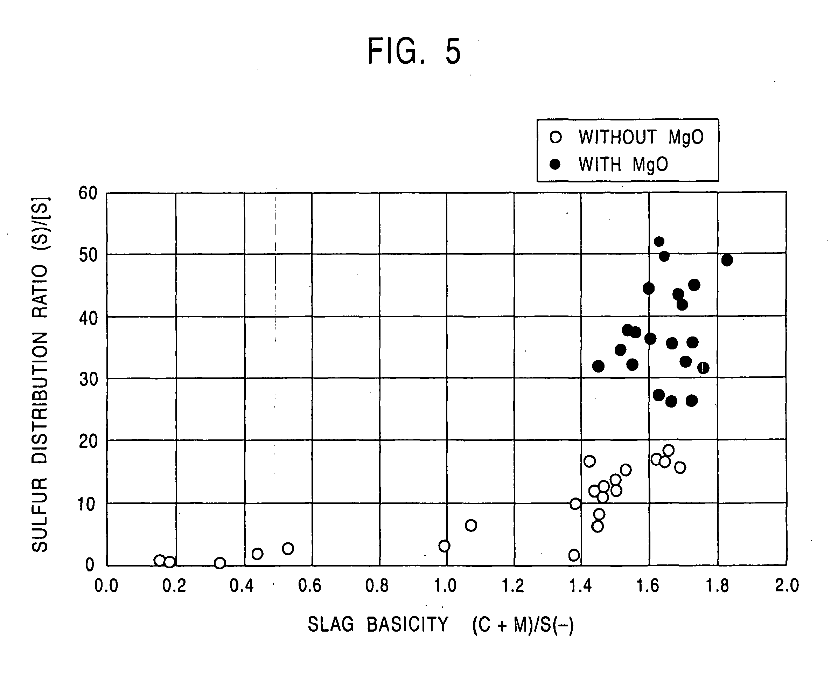

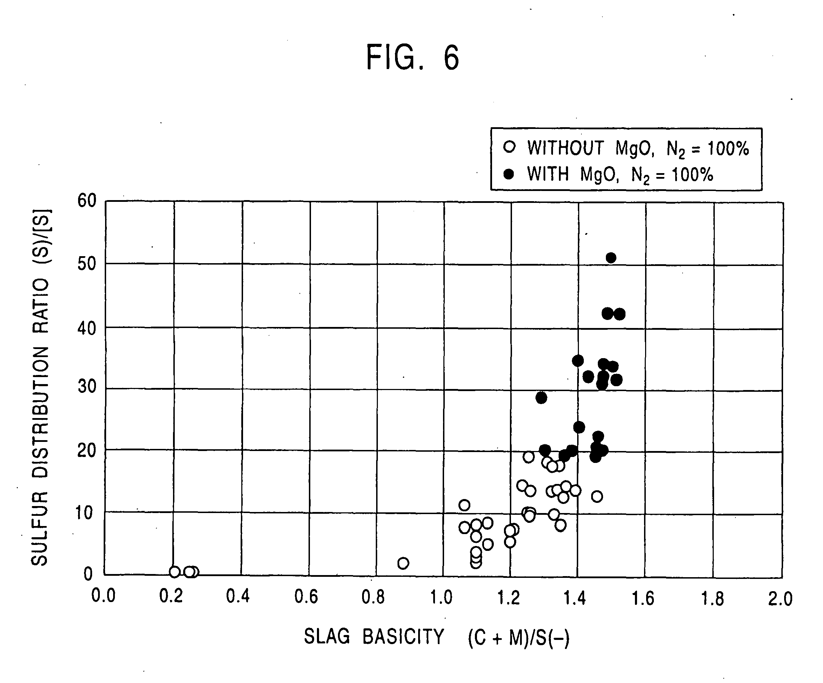

Note that hematite ore, which is a typical iron ore, was employed as the iron ore (A). On the other hand, magnetite ore, which is also a typical iron ore, was employed as the iron ore (B). With the present example, various types of raw material compacts containing the aforementioned materials were subjected to heating and reducing with variation of the slag basicity (C + M)/S in the final stage within the maximal slag basicity value of 1.85. The test results are shown in Figs. 5 and 6.

Fig. 5 shows the test results in a case of employing the iron ore (A), i.e., hematite, wherein the horizontal axis represents the basicity (C + M)/S of the generated slag, and the vertical axis represents the sulfur partition ratio (S)/[S] obtained from the analysis values of sulfur by measuring the sulfur concentration of the obtained granulated metallic iron and the resultant slag.

As can be clearly understood from the results shown in Fig. 5, in a case of employing the iron ore (A), i.e., hematite, as an iron-oxide-containing substance, increased slag basicity (C + M)/S, in particular, the increased slag basicity (C + M)/S exceeding 1.4, causes a rapid increase of the sulfur partition ratio (S)/[S]. Note that in Fig. 5, the white circles represent the test results in a case of supplying only limestone as a slag-basicity adjusting agent, and the solid circles represent the test results in a case of supplying limestone and dolomite serving as an MgO-containing substance for adjusting the slag basicity (C + M)/S.

While the obtained results are dependent upon the brand of the supplied coal, as can be clearly understood from the test results, manufacturing is made while maintaining the sulfur partition ratio (S)/[S] of 25 or more, preferably, 30 or more, in order to preferably suppress the sulfur concentration of the obtained granulated metallic iron to 0.05% or less, and more preferably 0.04% or less.

In a case of the slag basicity (C + M)/S of 1.4 or more, the greater the slag basicity (C + M)/S is, the greater the sulfur partition ratio (S)/[S] is. In this case, it can be clearly understood from the drawing that aggressive addition of an MgO-containing substance to the slag composition further increases the sulfur partition ratio (S)/[S] in a sure manner as compared with a case without supplying the MgO-containing substance. Note that in a case wherein the MgO-containing substance is not supplied, the increased slag basicity (C + M)/S of around 1.7 in the final stage causes an increase of the melting point of the slag so coalescence of the molten slag occurs less readily, leading to inhibition of coalescence of reduced iron. As a result, a great number of fine granulated metallic iron particles are generated, leading to difficulty in obtaining large-sized granulated metallic iron with the high yield.

However, in a case of slag basicity (C + M)/S of 1.7 or more without supplying the MgO-containing substance, addition of a CaF₂-containing substance with the CaF₂ concentration of 0.2% or more, preferably 0.4% or more, as to the slag composition, improves the fluidity of the slag as well as reducing the melting point of the slag again, thereby obtaining large-sized granulated metallic iron with the high yield.

On the other hand, Fig. 6 shows the test results in a case of employing magnetite ore as an iron-oxide-containing substance, obtained in the test performed in the same way as in a case of employing hematite as described above, which exhibits generally the same nature as shown in Fig. 5. However, with the present example, the increased slag basicity (C + M)/S of 1.2 or more causes a rapid increase of the sulfur partition ratio (S)/[S]. While there is no clear difference between the test results in the present example and the test results shown in Fig. 5 described above, it has been confirmed that the test results in a case of supplying dolomite as an MgO-containing substance, represented by the solid circles, exhibit a significant high sulfur partition ratio (S)/[S] as compared with the test results in a case wherein dolomite, represented by white circles, is not supplied. That is to say, with the test results in a case of employing magnetite ore as an iron-oxide-containing substance, addition of the MgO-containing substance has generally the same advantage as with a case of employing the hematite ore (A) as an iron-oxide-containing substance described above.

As described above, with the reducing and melting process according to the present embodiment, addition of an MgO-containing substance to the raw material mixture is adjusted beforehand such that the slag basicity (C + M)/S exhibits 1.3 or more, preferably 1.4 or more, in the final stage, effecting high desulfurization, thereby suppressing the sulfur concentration in the granulated metallic iron to 0.05% or less, and more preferably 0.04% or less. It is assumed that the reason is that addition of a suitable amount of the MgO-containing substance reduces the melting point of the slag in the same way as in a case of making addition of fluorite, even in the event that any CaF₂-containing substance has not been supplied, effecting improvement of separation of the reduced iron from the slag, and coalescence of both the slag and the reduced iron.

### Example 2

Next, an example will be described wherein two kinds of raw material compacts were prepared in the form of pellets, mainly formed of hematite ore (A) and coal shown in the aforementioned Table 1 and Table 2, and further containing limestone or dolomite, and these pellets thus formed were subjected to reducing and melting with a rotary hearth-type reducing furnace. Note that raw-material pellets (a) and (b) used here had the composition shown in Table 3. Both the pellets (a) and (b) were formed of hematite ore (A). Note that the former pellet (a) has not been subjected to addition of an MgO-containing substance. On the other hand, the latter pellet (b) has been subjected to addition of natural dolomite ore serving as an MgO-containing substance. With the present test, operation was performed while maintaining an atmosphere temperature of 1450°C within the furnace.

The analysis values of the granulated metallic iron and the slag, generated in the test, and the slag basicity (C + M)/S and the sulfur partition ratio (S)/[S], are shown in Table 4.

**[Table 3]**

| TYPE | COMPOSITION OF RAW MATERIAL (% by mass) | | | | |
|---|---|---|---|---|---|
| | IRON ORE | COAL | CaCO₃ | DOLOMITE | BINDER |
| PELLET (a) | 73.33 | 20.74 | 4.73 | 0 | 1.2 |
| PELLET (b) | 73.2 | 20.7 | 3.09 | 1.81 | 1.2 |

**[Table 4]**

| | GRANULATED IRON | | SLAG | | | | (S)/[S] | (C+M)/S |
|---|---|---|---|---|---|---|---|---|
| | [C] | [S] | CaO | SiO₂ | MgO | S | | |
| PELLET (a) | 4.03 | 0.059 | 46.46 | 28.82 | 2.5 | 1.351 | 22.75 | 1.699 |
| PELLET (b) | 4.12 | 0.035 | 40.26 | 28.68 | 8.81 | 1.588 | 45.03 | 1.711 |

As clearly shown in Table 4, while the pellet (a) was formed with the slag basicity (C + M)/S within a range determined according to the present invention, the slag exhibited the low MgO concentration of 2.5% out of a range determined according to the present invention, since the pellet, which was a raw material mixture compact, had been subjected to addition of CaCO₃ alone, without supplying dolomite. In this case, the sulfur partition ratio (S)/[S] exhibited 22.75, which did not reach the desired value of 25.0, leading to high sulfur concentration [S] of 0.059% in the granulated metallic iron.

On the other hand, the pellet (b), which satisfied the required conditions according to the present invention, had been subjected to addition of dolomite with a concentration of 1.81%, effecting the slag basicity (C + M)/S of 1.71, the high MgO concentration of 8.81% in the slag, and the extremely high sulfur partition ratio (S)/[S] of 45.03, thereby obtaining extremely low sulfur concentration [S] of 0.035% of the generated granulated metallic iron.

As described above, with the manufacturing method according to the present invention, it has been confirmed that the granulated metallic iron can be generated with sulfur concentration [S] of 0.05% or less, more preferably 0.04% or less, by suitably adjusting an MgO-containing substance in the raw material mixture such that the slag basicity (C + M)/S exhibits a range of 1.3 to 2.3 in the final stage, and the MgO-concentration in the slag exhibits a range of 5 to 13%, which is dependent upon the respective concentration of the CaO, MgO, and SiO₂, contained in the material mixture.

## Claims

1. A manufacturing method for granulated metallic iron with low sulfur concentration, wherein a raw material mixture containing an iron-oxide containing substance and a carbonaceous reducing agent is supplied onto a hearth of a heated moving hearth-type reducing furnace so as to be heated, the iron oxide contained in said raw material mixture is reduced with said carbonaceous reducing agent, and the generated metallic iron is coalesced in the form of grains while being separated from the resultant slag, following which the generated metallic iron is cooled so as to solidify, whereby granulated metallic iron is completed;
and wherein the amounts of a CaO-containing substance, an MgO-containing substance, and a SiO₂-containing substance, contained in said raw material mixture, are adjusted such that operation is performed with the slag basicity (CaO + MgO)/SiO, of 1.3 to 2.3, and with MgO-concentration of 5 to 13% by mass as to said slag composition, which are dependent upon the concentration of each of CaO, MgO, and SiO₂, contained in said raw material mixture,
wherein an MgO-containing substance is further blended to said raw material mixture so as to adjust said slag basicity and said MgO-concentration, wherein a sulfur partition ratio (s)/[s] between the slag and the metal of 25 or more is main-tained

2. A manufacturing method according to Claim 1, wherein dolomite ore is employed as said MgO-containing substance.

3. A manufacturing method according to Claim 1, wherein a CaF₂-containing substance is further contained in said raw material mixture.

4. A manufacturing method according to Claim 3, wherein fluorite is employed as said CaF₂-containing substance.

5. A manufacturing method according to Claim 3 or Claim 4, wherein said CaF₂-containing substance is contained in said raw material mixture with CaF₂-concentration of 0.2 to 2% by mass.

6. A manufacturing method according to Claim 1, wherein carbonaceous powder is supplied so as to be spread over said hearth prior to supplying said raw material mixture to said heated moving hearth-type reducing furnace.

7. A manufacturing method according to Claim 6, wherein said carbonaceous powder is supplied so as to be spread over said hearth with a thickness of 2 mm or more.

8. A method according to Claim 1, wherein operation is performed with said heated moving hearth-type reducing furnace under an operation temperature of 1250 to 1550°C.

## Patentansprüche

1. Herstellungsverfahren für gekörntes metallisches Eisen mit niedriger Schwefelkonzentration, bei dem ein Ausgangsmaterialgemisch, das eine Eisenoxidenthaltende Substanz und ein Kohlenstoff-enthaltendes Reduktionsmittel enthält, einem Herd eines Reduktionsofens des beheizten Herdwagentyps zugeführt wird, so dass es erwärmt wird, das in dem Ausgangsmaterialgemisch enthaltene Eisenoxid mit dem Kohlenstoff-enthaltenden Reduktionsmittel reduziert wird und das erzeugte metallische Eisen in der Form von Körnern vereinigt wird, während es von der resultierenden Schlacke getrennt wird, worauf das erzeugte metallische Eisen gekühlt wird, so dass es sich verfestigt, wodurch gekörntes metallisches Eisen erhalten wird,
und wobei die Mengen einer CaO-enthaltenden Substanz, einer MgOenthaltenden Substanz und einer SiO₂-enthaltenden Substanz, die in dem Ausgangsmaterialgemisch enthalten sind, so eingestellt werden, dass der Prozess mit einer Schlackenbasizität (CaO + MgO)/SiO₂ von 1,3 bis 2,3 und mit einer MgO-Konzentration von 5 bis 13 Massenprozent bezogen auf die Schlackenzusammensetzung durchgeführt wird, die von der Konzentration von jedem von CaO, MgO und SiO₂, die in dem Ausgangsmaterialgemisch enthalten sind, abhängig sind,
wobei dem Ausgangsmaterialgemisch ferner eine MgO-enthaltende Substanz zugemischt wird, so dass die Schlackenbasizität und die MgO-Konzentration eingestellt werden, wobei ein Schwefelverteilungsverhältnis (S)/[S] zwischen der Schlacke und dem Metall von 25 oder mehr aufrechterhalten wird.

2. Herstellungsverfahren nach Anspruch 1, bei dem Dolomiterz als MgO-enthaltende Substanz eingesetzt wird.

3. Herstellungsverfahren nach Anspruch 1, bei dem in dem Ausgangsmaterialgemisch ferner eine CaF₂-enthaltende Substanz enthalten ist.

4. Herstellungsverfahren nach Anspruch 3, bei dem als CaF₂-enthaltende Substanz Fluorit verwendet wird.

5. Herstellungsverfahren nach Anspruch 3 oder Anspruch 4, bei dem die CaF₂-enthaltende Substanz in dem Ausgangsmaterialgemisch mit einer CaF₂-Konzentration von 0,2 bis 2 Massenprozent enthalten ist.

6. Herstellungsverfahren nach Anspruch 1, bei dem ein Kohlenstoff-enthaltendes Pulver vor dem Zuführen des Ausgangsmaterialgemischs zu dem Reduktionsofen des beheizten Herdwagentyps so zugeführt wird, dass es über dem Herd verteilt wird.

7. Herstellungsverfahren nach Anspruch 6, bei dem das Kohlenstoff-enthaltende Pulver so zugeführt wird, dass es über dem Herd mit einer Dicke von 2 mm oder mehr verteilt wird.

8. Verfahren nach Anspruch 1, wobei der Prozess mit dem Reduktionsofen des beheizten Herdwagentyps bei einer Betriebstemperatur von 1250 bis 1550 °C durchgeführt wird.

## Revendications

1. Procédé de préparation de fer métallique granulé présentant une faible concentration en soufre, dans lequel un mélange de matière première, comprenant une substance contenant un oxyde de fer et un agent réducteur carboné est alimenté dans le sole d'un four réducteur à sole mobile de manière à être chauffé, l'oxyde de fer contenu dans le mélange de matière première est réduit par l'agent réducteur carboné, et le fer métallique généré fusionne sous forme de grains en se séparant du laitier résultant, après quoi le fer métallique généré est refroidi pour solidification, et obtenir du fer métallique granulé ;
et dans lequel les quantités de substance contenant CaO, de substance contenant MgO et de substance contenant SiO₂ présentes dans le mélange de matière première, sont ajustées de sorte que l'opération est réalisée avec une basicité du laitier (CaO + MgO)/SiO₂ située dans l'intervalle allant de 1,3 à 2,3, et avec une concentration en MgO allant de 5 à 13% en masse pour la composition du laitier, qui dépendent de la concentration de chacun de CaO, MgO et SiO₂ contenus dans ledit mélange de matière première,
et dans lequel une substance contenant MgO est mélangée au mélange de matière première de manière à ajuster ladite basicité du laitier et ladite concentration en MgO, où un rapport de partition du soufre (S)/[S] entre le laitier et le métal de 25 ou plus est maintenu.

2. Procédé de préparation selon la revendication 1, dans lequel le minerai dolomite est utilisé comme substance contenant MgO.

3. Procédé de préparation selon la revendication 1, dans lequel une substance contenant CaF₂ est présente dans ledit mélange de matière première.

4. Procédé de préparation selon la revendication 3, dans lequel la fluorite est utilisée comme substance contenant CaF₂.

5. Procédé de préparation selon la revendication 3 ou 4, dans lequel ladite substance contenant CaF₂ est présente dans ledit mélange de matière première en une concentration de CaF₂ située dans l'intervalle allant de 0,2 à 2% en masse.

6. Procédé de préparation selon la revendication 1, dans lequel la poudre carbonée est alimentée de manière à être répartie sur ledit sole avant d'alimenter le mélange de matière première dans le four réducteur à sole mobile.

7. Procédé de préparation selon la revendication 6, dans lequel la poudre carbonée est alimentée de manière à être répartie sur ledit sole avec une épaisseur de 2 mm ou plus.

8. Procédé de préparation selon la revendication 1, dans lequel l'opération est réalisée avec un four réducteur à sole mobile chauffé à une température de mise en oeuvre allant de 1250 à 1550°C.
